# EUROPEAN PATENT APPLICATION

(11) **EP 4 721 907 A1**
(43) Date of publication of application: **08.04.2026**
(21) Application number: 24874533.3
(22) Date of filing: 25.09.2024
(51) Int. Cl.: B23K 20/12

(54) **MACHINE TOOL AND FRICTION JOINING METHOD**

(30) Priority: 05.10.2023 JP 2023173481
(71) Applicant: Citizen Machinery Co., Ltd., Nagano 389-0206 (JP)
(72) Inventor: SUZUKI, Toshiyuki, Kitasaku-gun, Nagano 389-0206 (JP)
(74) Representative: Fleuchaus & Gallo Partnerschaft mbB
(86) International application number: PCT/JP2024/034258
(87) International publication number: WO 2025/074928

(57) **Abstract**

The machine tool (1) includes a front spindle (11) capable of gripping a first member (W1), a rear spindle (12) capable of gripping a second member (W2), and a guide bushing device (13) arranged between the front spindle (11) and the rear spindle (12), and frictionally welds the first member (W1) gripped by the front spindle (11) and the second member (W2) gripped by the rear spindle (12) with frictional heat generated at respective joint surfaces (CS) of the first member (W1) and the second member (W2) by relatively rotating the first member (W1) and the second member (W2) and bringing them into contact. The guide bushing device (13) is configured to guide the outer peripheral surface (OS1) of the first member (W1) without guiding the outer peripheral surface (OS2) of the second member (W2) when the first member (W1) and the second member (W2) that are relatively rotated start to contact each other, and to guide the outer peripheral surface (OS2) of the second member (W2) when the first member (W1) and the second member (W2) are pressed against each other.

## Description

### TECHNICAL FIELD

The present disclosure relates to a machine tool and a friction welding method.

### BACKGROUND ART

There is known an apparatus capable of performing friction welding in which a first member and a second member are brought into contact with each other while being relatively rotated to generate frictional heat, and the first member and the second member are pressed against each other to be welded together (see Patent Document 1).

### RELATED ART DOCUMENTS

### PATENT DOCUMENT

Patent Document 1: Japanese Unexamined Patent Publication No. S51(1976)-140855

### SUMMARY OF THE INVENTION

### PROBLEMS TO BE SOLVED BY THE INVENTION

However, in the case where the friction welding is performed by a machine tool, it is not easy to suppress misalignment between the first member and the second member.

It is therefore desirable to provide a machine tool capable of suppressing misalignment between two members to be frictionally welded.

### MEANS FOR SOLVING THE PROBLEMS

A machine tool according to an embodiment of the present disclosure includes two spindles arranged to face each other so as to be movable in a spindle-line direction and configured to be rotated, the spindles respectively gripping a first member and a second spindle, and a guide member provided between the two spindles. The machine tool is configured to frictionally weld the first member and the second member by pressing the first member and the second member against each other in a state of the guide member guiding the first member and the second member by moving at least one of the two spindles, with the first member and the second member being in contact with each other in a rotation state caused by a relative rotation of the two spindles. The machine tool is provided with a movement controller configured to control movement of the at least one of the two spindles in such a manner that the guide member guides one of the first member or the second member when the pressing is started and the guide member guides an other of the first member or the second member when the pressing is finished.

### EFFECTS OF THE INVENTION

The machine tool described above can suppress misalignment between two members to be frictionally welded.

### BRIEF DESCRIPTION OF THE DRAWINGS

[FIG. 1] FIG. 1 is a perspective view of a machine tool according to an embodiment of the present disclosure.
[FIG. 2] FIG. 2 is a cross-sectional view of a guide bushing device.
[FIG. 3] FIG. 3 is a flowchart of processing of a leftover material.
[FIG. 4] FIG. 4 is a diagram illustrating steps of the processing of a leftover material.
[FIG. 5] FIG. 5 is a flowchart of a friction welding process.
[FIG. 6] FIG. 6 is a view illustrating steps of the friction welding process.
[FIG. 7] FIG. 7 is a cross-sectional view of a first member, a second member, a rear spindle, and a guide bushing device.
[FIG. 8] FIG. 8 is a view illustrating a configuration example of a joint part between a leftover material and a new material to be frictionally welded.
[FIG. 9] FIG. 9 is a view illustrating another configuration example of a joint part between a leftover material and a new material to be frictionally welded.
[FIG. 10] FIG. 10 is a view illustrating yet another configuration example of a joint part between a leftover material and a new material to be frictionally welded.

### DESCRIPTION OF EMBODIMENTS

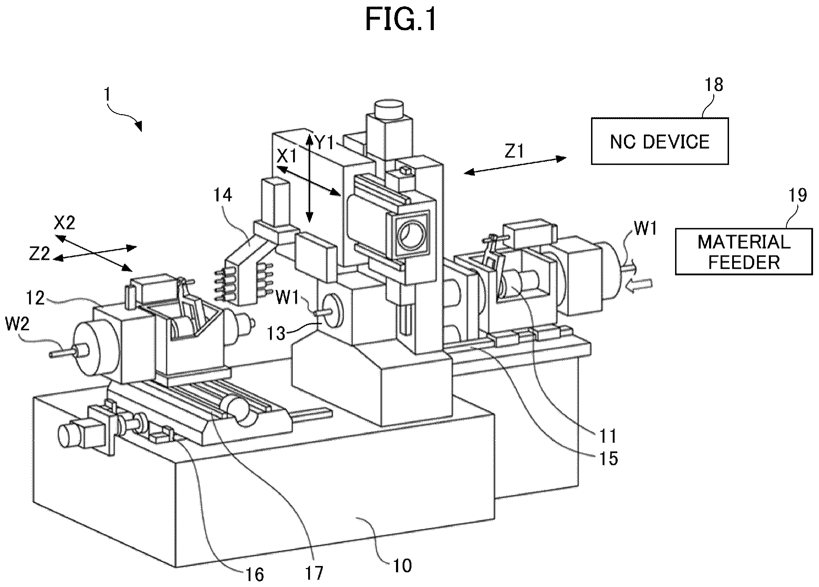

FIG. 1 is a perspective view of a machine tool 1 according to the present embodiment. In the machine tool 1, a front spindle 11, a rear spindle 12, a guide bushing device 13, and a tool post 14 are mounted on a bed 10. The front spindle 11 is one of spindles mounted on the machine tool 1, and is rotatably mounted on a front headstock that moves along a rail 15 extending in a Z1 direction, which is a spindle-line direction. The front spindle 11 is provided movably in the Z1 direction via the front headstock. The rear spindle 12 is another one of the spindles mounted on the machine tool 1, and is rotatably mounted on a rear headstock which moves along a rail 16 and a rail 17 which are orthogonal to each other. The rail 16 extends in a Z2 direction, which is a spindle-line direction of the rear spindle 12. The rear spindle 12 is provided so as to be movable via the rear headstock in each of the Z2 direction and an X2 direction, which is orthogonal to the Z2 direction.

Each of the front spindle 11 and the rear spindle 12 is provided with a collet chuck as in a conventional case, and can grip a material made of a long bar in an openable and closable manner.

The tool post 14 is mounted with a tool as a processing means for processing the material. The tool post 14 is installed on a slide that moves along rails extending in the X1 direction and the Y1 direction that are orthogonal to each other and orthogonal to the Z1 direction, and is provided so as to be movable in the X1 direction and the Y1 direction.

The rotation and movement of each of the front spindle 11 and the rear spindle 12, the movement of the tool post 14, and the like are controlled by an NC device 18, which is a numerical control device mounted on the machine tool 1, as a movement control device.

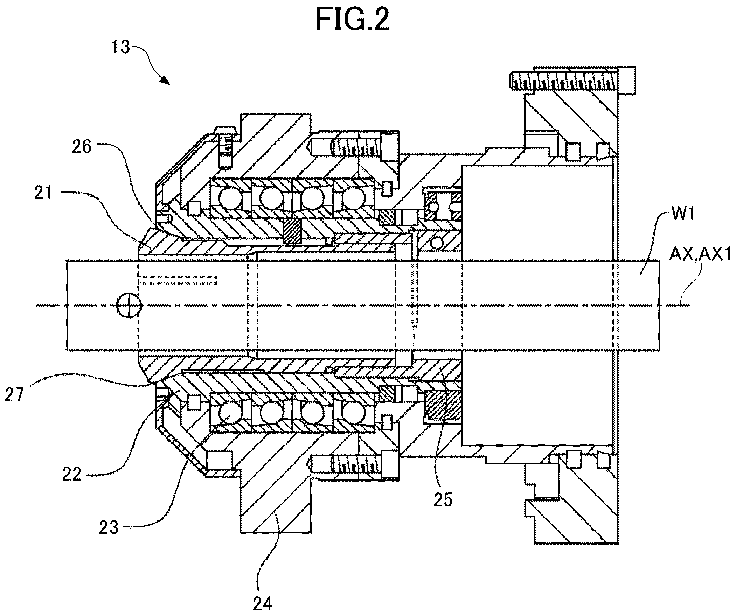

FIG. 2 is a cross-sectional view of the guide bushing device 13. The guide bushing device 13 includes a guide bushing 21, a guide bushing sleeve 22, a bearing 23, a guide bushing holder 24, and a draw bar 25.

The guide bushing 21 is an example of a guide member for guiding a material, and is accommodated in the guide bushing sleeve 22. The guide bushing sleeve 22 is rotatably supported in the guide bushing holder 24 via the bearing 23. The guide bushing holder 24 is fixed to the bed 10 of the machine tool 1. The draw bar 25 is screwed to a rear end part (right end part) of the guide bushing 21.

The guide bushing 21 is screwed into the draw bar 25, whereby a tapered surface 26 formed at the distal end part of the guide bushing 21 engages with a tapered surface 27 formed at the distal end part of the guide bushing sleeve 22, and an opening degree of the guide bushing 21 is adjusted.

The machine tool 1 is configured to cause a distal end of a material (a first member W1), which is supplied from the material feeder 19 to the front spindle 11 and gripped by the front spindle 11, to protrude from the guide bushing 21, and machines the material with a tool selected among tools mounted on the tool post 14 while guiding the material rotatably and movably in the spindle-line direction with the guide bushing 21.

The material is cut off after the distal end portion is machined, and the portion that is machined and cut off on the front spindle 11 side is gripped by the rear spindle 12 and subjected to rear machining, and the machining is thus completed. The rear machining can be performed by a cutting tool as machining means mounted on a tool post for the rear spindle 12 provided separately from the tool post 14. After the cutting-off, the front spindle 11 that has released the gripping of the material retracts by an amount of the machining on the front spindle 11 side and grips the material again, and the machining is repeatedly performed. When the front spindle 11 side cannot retract by an amount of the machining so as to grip the material, this state is taken as a material shortage and the rest of the material becomes a leftover material. A material shortage is detected by a sensor or the like. The machine tool 1 is configured to perform processing of a leftover material for making a part of the leftover material reusable when material shortage occurs.

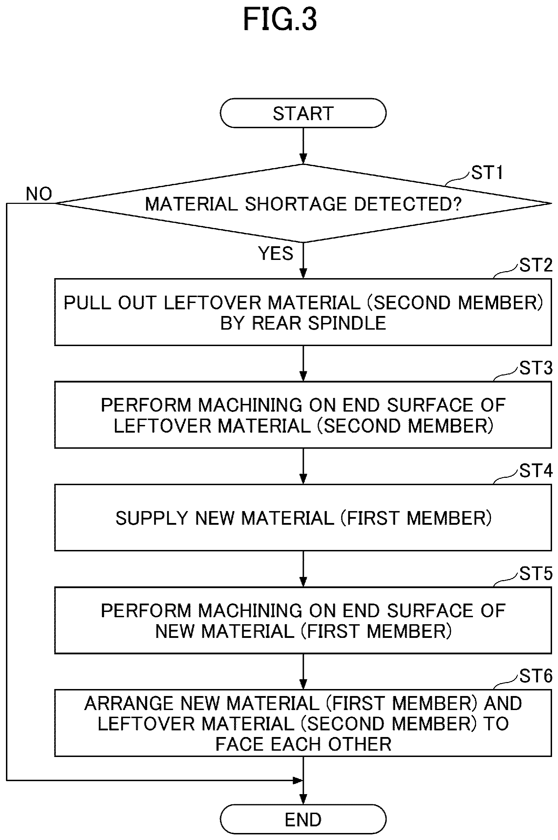

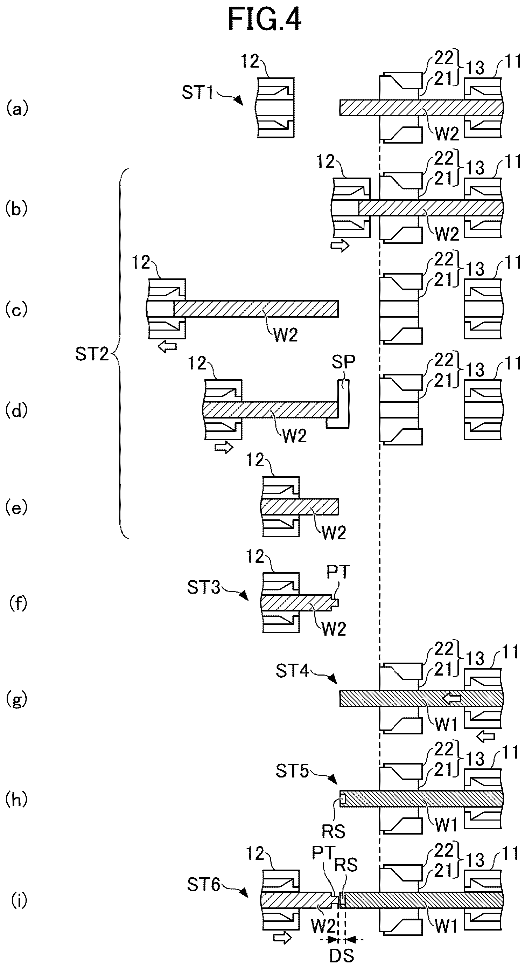

FIG. 3 is a flowchart illustrating an example of the processing of a leftover material performed by the machine tool 1. FIG. 4 is a cross-sectional view of the front spindle 11, the rear spindle 12, and the guide bushing device 13, and hatching is partially added for clarification. The processing of a leftover material processing illustrated in FIGS. 3 and 4 is realized by the operation of each element of the machine tool 1 in response to a command from the NC device 18.

The NC device 18 of the machine tool 1 determines whether or not a material shortage is detected (step ST1).

In the case where a material shortage is not detected (No in step ST1), the NC device 18 ends processing of a leftover material and continues the machining. When a material shortage is detected, the NC device 18 causes, as illustrated in FIG. 4(a), the material (second member W2) gripped by the front spindle 11 to protrude from the guide bushing 21 by an amount that can be gripped by the rear spindle 12 through moving the front spindle 11 and controlling the gripping, and after the machined distal end portion of the second member W2 is cut off and transferred to the rear spindle 12 and machined on the rear spindle 12 side, the NC device 18 causes the rear spindle 12 to face the front spindle 11 on the same spindle line as illustrated in FIG. 4(b) to move the second member W2 to the front spindle 11 side and to cause the rear spindle 12 to grip the distal end of the second member W2.

Thereafter, as illustrated in FIG. 4(c), the NC device 18 causes the second member W2, which has been released from the gripping by the front spindle 11, to be pulled out from the front spindle 11 and the guide bushing device 13 as a leftover material by moving the rear spindle 12 (step ST2).

Thereafter, the NC device 18 causes the distal end of the leftover material (the end part on the front spindle 11 side) to be in contact with a substantially L-shaped stopper SP provided on the tool post 14 as illustrated in FIG. 4(d), and changes the gripping position of the leftover material by the rear spindle 12 to the vicinity of the distal end of the leftover material as illustrated in FIG. 4(e).

Thereafter, the NC device 18 performs rear machining in such a manner that a protrusion PT is formed on the distal end surface of the leftover material as illustrated in FIG. 4(f) (step ST3).

As illustrated in FIG. 4(g), the NC device 18 causes the material feeder 19 to insert a newly fed material as a new material (first member W1) into the guide bushing 21 in such a manner that the distal end of the new material protrudes from the guide bushing 21 by a predetermined distance (step ST4), and causes the front spindle 11 to grip the new material.

Thereafter, as illustrated in FIG. 4(h), the NC device 18 causes the distal end of the new material to be machined so that the recess RS to be fitted to the protrusion PT is formed (step ST5).

Thereafter, with the front spindle 11 and the rear spindle 12 respectively gripping the new material and the leftover material as the first member W1 and the second member W2, the NC device 18 causes the first member W1 and the second member W2 to face each other in such a manner that a distance between the inner bottom surface of the recess RS of the first member W1 and the distal end surface (right end surface) of the protrusion PT of the second member W2 becomes a predetermined length DS, and the processing of the leftover material is finished. The machine tool 1 is configured to perform a friction welding process for friction welding the leftover material and the new material after the processing of the leftover material is finished.

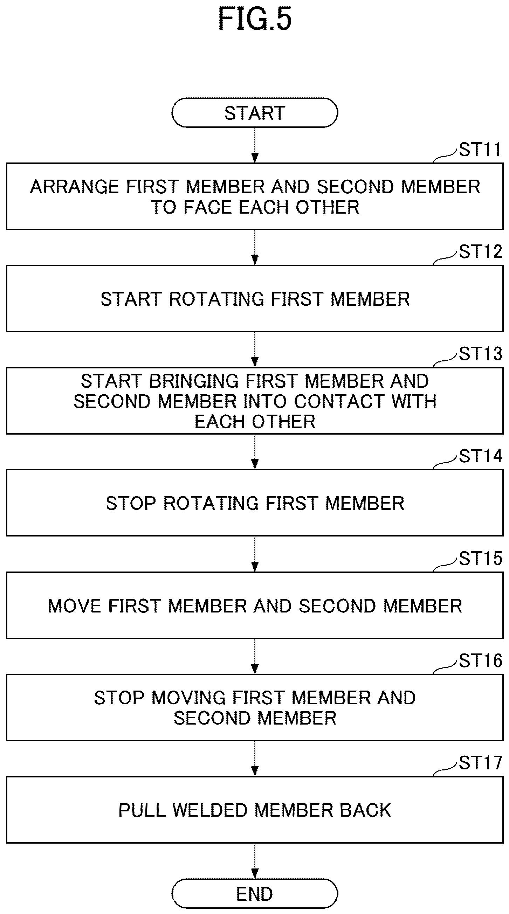

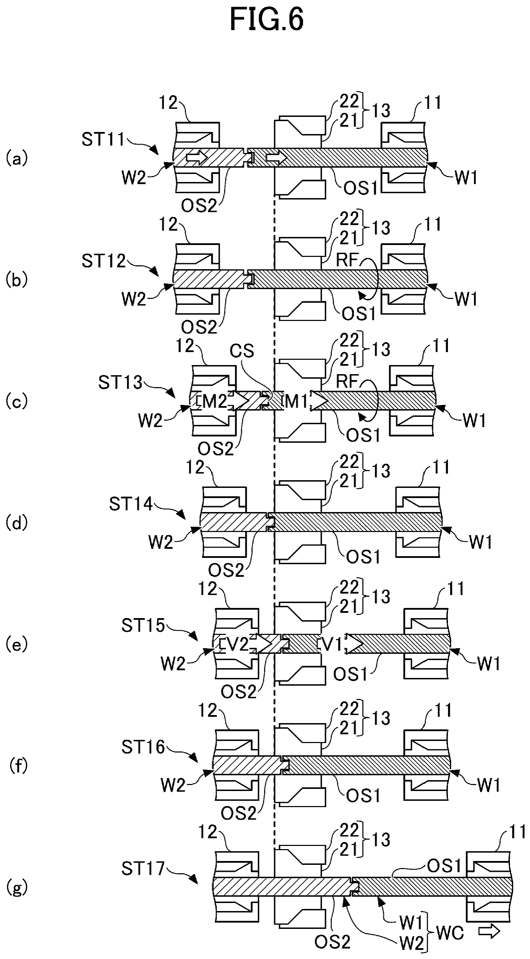

The friction welding process illustrated in FIGS. 5 and 6 is realized by the operation of each element of the machine tool 1 in response to a command from the NC device 18. In FIG. 6, hatching is partially applied for clarification.

In the state where the first member W1 and the second member W2 are arranged to face each other as illustrated in FIG. 6(a) (step ST11) as a result of the processing of the leftover material, the NC device 18 causes the rotational drive of the front spindle 11 to start rotating the first member W1 as illustrated in FIG. 6(b) (step ST12).

Thereafter, as illustrated in FIG. 6(c), the NC device 18 causes the first member W1 and the second member W2 to start being in contact with each other (step ST3). The NC device 18 causes the front spindle 11 to be moved to the opposite side of the rear spindle 12 so that the first member W1 moves to the opposite side of the rear spindle 12 (to the right side in the drawing) at a predetermined moving speed M1, and causes the rear spindle 12 to be moved to the front spindle 11 side so that the second member W2 moves to the front spindle 11 side (to the right side in the drawing) at a predetermined moving speed M2 higher than the moving speed M1. Then, the second member W2 abuts on the first member W1 at a predetermined timing, and frictional heat is generated on a contact surface (joint surface CS) between the first member W1 and the second member W2.

Thereafter, the NC device 18 causes rotation of the first member W1 (step ST14) to stop as illustrated in FIG. 6(d), and performs an "upsetting step" in which the first member W1 is moved rightward at a first moving speed V1 and the second member W2 is moved rightward at a second moving speed V2 higher than the first moving speed V1 so that the first member W1 and the second member W2 are pressed against each other (step ST15) as illustrated in FIG. 6(e), and the first member W1 and the second member W2 are thereby frictionally welded.

FIG. 6(f) illustrates a state where the movement of the first member W1 and the second member W2 is stopped (step ST16) and the "upsetting step" is completed. The NC device 18 controls the movement of the front spindle 11 and the rear spindle 12 by setting the first moving speed V1 and the second moving speed V2 in such a manner that the guide bushing 21 guides the first member W1 when the "upsetting step" is started and the guide bushing 21 guides the second member W2 when the "upsetting step" is completed.

Thereafter, as illustrated in FIG. 6(g), the NC device 18 causes the rear spindle 12 to release the gripping of the welded member WC formed by the friction welding of the first member W1 and the second member W2, and causes the front spindle 11 to retract in a direction away from the rear spindle 12 so that the welded member WC is removed from the rear spindle 12 and pulled back (step ST17).

The guide bushing 21 guides the second member W2 by pulling back the welded member WC. In this way, the NC device 18 causes the second member W2 as the leftover material to be joined to the first member W1 by friction welding, and enables processing of the leftover material.

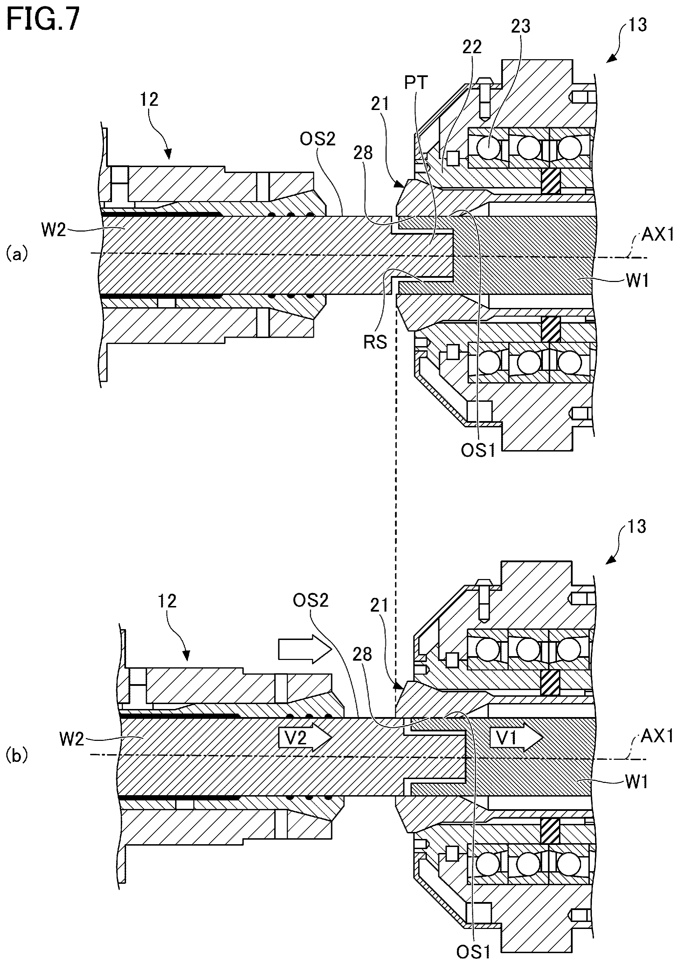

Since the "upsetting step" is performed by moving the first member W1 rightward at the first moving speed V1 and moving the second member W2 rightward at the second moving speed V2, the first member W1 and the second member W2 are pressed against each other while the first member W1 and the second member W2 are integrally moved rightward. When the upsetting step is started, the state where the outer peripheral surface OS1 of the first member W1 is guided by the inner peripheral surface 28 of the guide bushing 21 as illustrated in FIG. 7(a) is shifted to the state where both the outer peripheral surface OS1 of the first member W1 and the outer peripheral surface OS2 of the second member W2 are guided by the guide bushing 21 as illustrated in FIG. 7(b) through the moving of the first member W1 and the second member W2 while being pressed to each other, and the "upsetting step" can be thereby completed as illustrated in FIG. 6(f). In this way, since the guide bushing 21 continuously guides the outer peripheral surface OS1 and the outer peripheral surface OS2 by the inner peripheral surface 28 during the upsetting step, it is possible to suppress misalignment between the axis AX1 of the first member W1 and the axis AX2 of the second member W2.

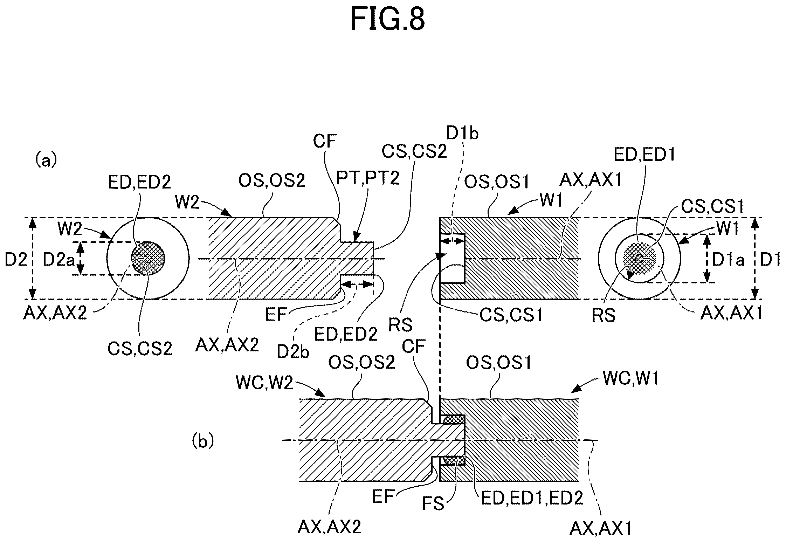

Next, a configuration example of a joint part between a new material (first member W1) and a leftover material (second member W2) will be described with reference to FIG. 8. FIG. 8 is a schematic view of the first member W1 and the second member W2. FIG. 8(a) is a view illustrating a state before the first member W1 and the second member W2 are welded, and includes a cross-sectional view and a front view along the axis AX1 of the first member W1 (a view of the joint surface CS of the first member W1 as viewed from the axial direction), and a cross-sectional view and a front view along the axis AX2 of the second member W2 (a view of the joint surface CS of the second member W2 as viewed from the axial direction). FIG. 8(b) is a view illustrating a state after the first member W1 and the second member W2 are welded, and is a cross-sectional view of the welded member WC along the axial direction.

The first member W1 is a cylindrical elongated member having a diameter D1, and has a cylindrical recess RS having a diameter D1a (< diameter D1) and a depth D1b at the distal end part (left end part). The second member W2 is a cylindrical elongated member having a diameter D2, and has a cylindrical protrusion PT2 having a diameter D2a (< diameter D2) and a protrusion length D2b at the distal end part (right end part). In the illustrated example, the diameter D1 of the first member W1 and the diameter D2 of the second member W2 are the same, the diameter D1a of the recess RS is larger than the diameter D2a of the protrusion PT2, and the protrusion length D2b of the protrusion PT2 is larger than the depth D1b of the recess RS.

As illustrated in FIG. 6(c), when the protrusion PT2 of the second member W2 is pressed against the inner bottom surface of the recess RS of the first member W1 while the first member W1 is being rotated at a rotation speed RF, the joint surface CS1 of the first member W1 and the joint surface CS2 of the second member W2 are brought into contact with each other to generate frictional heat. In FIG. 8, for the sake of clarity, a cross pattern is applied to the joint surface CS (the joint surface CS1 and the joint surface CS2).

The edge ED of the joint surface CS (the edge ED1 of the joint surface CS1 and the edge ED2 of the joint surface CS2) is located inside the inner wall of the recess RS, namely, near the axis AX (the axis AX1 of the first member W1 and the axis AX2 of the second member W2). The edge ED of the joint surface CS (the edge ED1 of the joint surface CS1 and the edge ED2 of the joint surface CS2) is located inside the outer peripheral surface OS (the outer peripheral surface OS1 of the first member W1 and the outer peripheral surface OS2 of the second member W2), namely near the axis AX.

In this way, the machine tool 1 forms the recess RS in the distal end part (left end part) of the first member W1, forms the protrusion PT in the distal end part (right end part) of the second member W2, and then performs the friction welding process. For this reason, as illustrated in FIG. 8(b), the machine tool 1 can seal the burrs FS generated during the friction welding process in the space formed by the recess RS and the protrusion PT, and thus can prevent the burrs FS from protruding outward from the outer peripheral surface OS of the welded member WC. Therefore, the machine tool 1 has an effect that the burr removal process for removing the burrs FS protruding outward from the outer peripheral surface OS1 or OS2 can be omitted.

In the illustrated example, the machine tool 1 is configured to form a chamfered part CF at the distal end part (right end part) of the outer peripheral surface OS2 of the second member W2. Therefore, the machine tool 1 brings an effect of suppressing the second member W2 becoming unable to enter the inside of the guide bushing device 13 due to the contact between the distal end surface (right end surface EF) of the second member W2 and the distal end part (left end part) of the guide bushing 21 (see FIG. 6) in the guide bushing device 13 during the upsetting step.

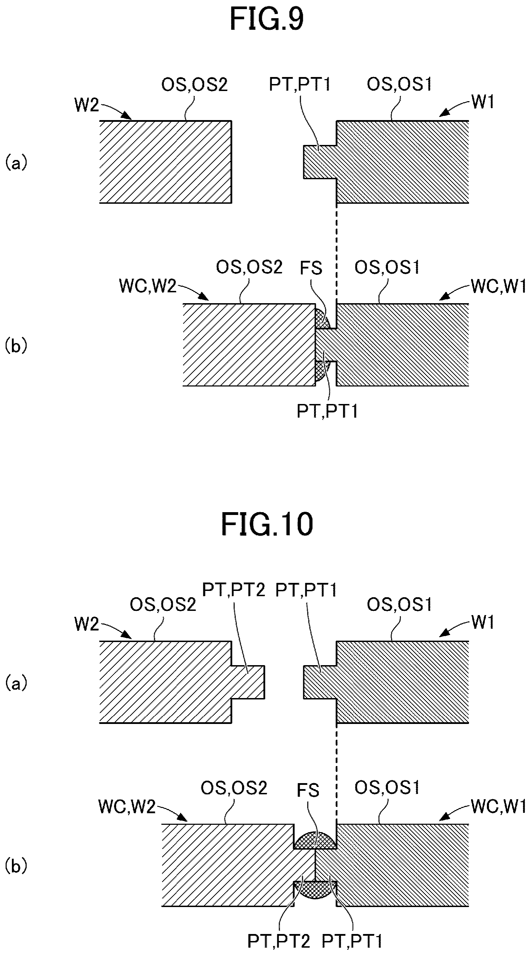

Next, a configuration example of a joint part between the first member W1 and the second member W2 will be described with reference to FIG. 9. FIG. 9 is a schematic view of the first member W1 and the second member W2. In FIG. 9, the chamfered part CF is omitted for the sake of simplicity. FIG. 9(a) is a cross-sectional view illustrating a state before the first member W1 and the second member W2 are welded. FIG. 9(b) is a cross-sectional view illustrating a state after the first member W1 and the second member W2 are welded.

The first member W1 of FIG. 9 differs from the first member W1 of FIG. 8 in that the protrusion PT1 is formed at the distal end part (left end part) in the former whereas the recess RS is formed at the distal end part (left end part) in the latter, but the former is the same as the latter in other respects.

The second member W2 of FIG. 9 differs from the second member W2 of FIG. 8 in that the protrusion PT2 is not formed at the distal end part (right end part) in the former whereas the protrusion PT2 is formed at the distal end part (right end part) in the latter. However, the second member W2 of FIG. 9 is the same as the second member W2 of FIG. 8 in other respects.

Thus, in the example illustrated in FIG. 9, the machine tool 1 performs the friction welding process after forming the protrusion PT1 at the distal end part (left end part) of the first member W1. Therefore, the machine tool 1 can prevent burrs FS generated during the friction welding process from protruding outward from the outer peripheral surface OS of the welded member WC. This is because the burrs FS are formed around the protrusion PT1 as illustrated in FIG. 9(b). Therefore, the machine tool 1 brings about an effect that the processing for removing the burrs FS can be omitted, as in the example illustrated in FIG. 8.

Next, another configuration example of a joint part between the first member W1 and the second member W2 will be described with reference to FIG. 10. FIG. 10 is a schematic view of the first member W1 and the second member W2. Similar to FIG. 9, the chamfered part CF is omitted in FIG. 10 for the sake of simplicity. FIG. 10(a) is a cross-sectional view illustrating a state before the first member W1 and the second member W2 are welded. FIG. 10(b) is a cross-sectional view illustrating a state after the first member W1 and the second member W2 are welded.

The first member W1 of FIG. 10 differs from the first member W1 of FIG. 8 in that the protrusion PT1 is formed at the distal end part (left end part) in the former whereas the recess RS is formed at the distal end part (left end part) in the latter, but the former is the same as the latter in other respects.

The second member W2 of FIG. 10 differs from the second member W2 of FIG. 8 in that a chamfered part is not formed at the distal end part (left end part) of the outer peripheral surface OS2 as the chamfered part CF is formed at the distal end part (right end part) of the outer peripheral surface OS2 in the second member W2 of FIG. 8. However, the second member W2 of FIG. 10 is the same as the second member W2 of FIG. 8 in other respects.

In this way, in the example illustrated in FIG. 10, the machine tool 1 performs the friction welding process after forming the protrusion PT1 in the distal end part (left end part) of the first member W1 and the protrusion PT2 in the distal end part (right end part) of the second member W2. Therefore, the machine tool 1 can prevent the burrs FS generated during the friction welding process from protruding outward from the outer peripheral surface OS of the welded member WC. This is because the burrs FS are formed around the protrusion PT1 and the protrusion PT2 as illustrated in FIG. 10(b). Therefore, the machine tool 1 brings an effect that the processing for removing the burrs FS can be omitted, as in the example illustrated in FIG. 8.

The machine tool 1 is a spindle-movable lathe in which each of the front spindle 11 and the rear spindle 12 is movable, and is also called a Swiss-type lathe. As illustrated in FIG. 6(c), the machine tool 1 is configured to perform friction welding with frictional heat generated at the contact surface (joint surface CS) of the first member W1 and the second member W2 by relatively rotating the first member W1 gripped by the front spindle 11 and the second member W2 gripped by the rear spindle 12 and bringing the first member W1 and the second member W2 into contact with each other. In the illustrated example, the machine tool 1 rotates the first member W1 at the rotation speed RF but does not rotate the second member W2; however, the machine tool 1 may rotate the second member W2 without rotating the first member W1 or may rotate both the first member W1 and the second member W2. In the case of rotating the first member W1 and the second member W2, the rotation directions may be the same or opposite. When both the first member W1 and the second member W2 are rotated, the rotation directions may be the same direction or opposite directions.

In the machine tool 1 according to the present embodiment, the guide bushing 21 guides the first member W1 when the "upsetting step" is started, and the guide bushing 21 guides the second member W2 when the "upsetting step" is completed, whereby the radial displacement of the second member W2 can be suppressed, and the misalignment between the first member W1 and the second member W2 when they are frictionally welded can be suppressed.

The machine tool 1 may be configured to have a chamfered part CF at an outer diameter corner part (outer diameter distal end part) of the second member W2 on the side facing the first member W1, as illustrated in FIG. 8.

With this configuration, the machine tool 1 can suppress contact between the outer diameter distal end part of the second member W2 and the guide bushing device 13 when a part of the second member W2 is drawn into the guide bushing device 13, and can suppress interference with the pressing of the second member W2 against the first member W1.

The machine tool 1 may machine the end surface of the second member W2 such that the edge ED2 of the joint surface CS2 of the second member W2 is positioned closer to the axis AX2 than the outer peripheral surface OS2 of the second member W2 guided by the guide bushing device 13, as illustrated in FIG. 8.

With this configuration, the machine tool 1 has an effect that protruding of the burrs FS generated during the friction welding process beyond the outer peripheral surface OS (the outer peripheral surface OS1 and the outer peripheral surface OS2) of the two members (the first member W1 and the second member W2) to be friction welded can be suppressed, as illustrated in FIG. 8(b). As a result, the machine tool 1 has an effect that a cutting process for removing the burrs FS can be omitted.

The machine tool 1 may machine at least one of the end surfaces of the first member W1 and the second member W2 so that at least one of the end surfaces of the first member W1 and the second member W2 facing each other has a protrusion PT that protrudes in the axial direction, as illustrated in FIGS. 8 through 10. In this case, the distal end surface of the protrusion PT becomes the joint surface CS. In the example illustrated in FIG. 8, the end surface of the second member W2 has a protrusion PT2 that protrudes in the axial direction. In the example illustrated in FIG. 9, the end surface of the first member W1 has a protrusion PT1 that protrudes in the axial direction. In the example illustrated in FIG. 10, the end surface of the first member W1 has the protrusion PT1 projecting in the axial direction, and the end surface of the second member W2 has the protrusion PT2 projecting in the axial direction.

With this configuration, as illustrated in FIGS. 8 through 10, the machine tool 1 has an effect of suppressing the burrs FS from protruding beyond the outer peripheral surfaces OS (the outer peripheral surface PS1 and the outer peripheral surface OS2) of the two members (the first member W1 and the second member W2) to be frictionally welded only by machining at least one end surface of the two members (the first member W1 and the second member W2) to be frictionally welded.

As illustrated in FIG. 8(a), the machine tool 1 may machine the end surfaces of the first member W1 and the second member W2 such that the end surface of the first member W1 has the recess RS recessed in the axial direction and the end surface of the second member W2 has the protrusion PT projecting in the axial direction. In this case, the distal end surface of the protrusion PT and the inner bottom surface of the recess RS become the joint surface CS.

With this configuration, the machine tool 1 can seal the burrs FS in the recess RS, and can more reliably suppress the burrs FS from protruding beyond the outer peripheral surfaces OS (the outer peripheral surface OS1 and the outer peripheral surface OS2) of the two members (the first member W1 and the second member W2) to be frictionally welded, as illustrated in FIG. 8(b).

The friction welding method by the machine tool 1 according to the embodiment of the present disclosure includes the friction step (step ST13 in FIG. 5) of bringing the first member W1 and the second member W2 into contact with each other while the guide bushing device 13 guides the outer peripheral surface OS1 of the first member W1 without guiding the outer peripheral surface OS2 of the second member W2, as illustrated in FIG. 6(c), and the upsetting step (step ST15 in FIG. 5) of pressing the first member W1 and the second member W2 against each other while the guide bushing device 13 is guiding a part (distal end part) of the outer peripheral surface OS2 of the second member W2, as illustrated in FIG. 6(e).

This friction welding method has an effect that misalignment between two members to be frictionally welded can be suppressed. This friction welding method has an effect that, when the upsetting step is performed, the displacement of the second member W2 in the radial direction can be suppressed by the guide bushing device 13 guiding a part (distal end part) of the outer peripheral surface OS2 of the second member W2, and in turn, misalignment between the two members to be frictionally welded can be suppressed.

The preferred embodiment of the present disclosure has been described in detail above. However, the present invention is not limited to the above-described embodiment. Various modifications or substitutions may be applied to the above-described embodiment without departing from the scope of the present invention. Further, the features described with reference to the embodiments may be appropriately combined as long as there is no technical contradiction.

This application claims priority based on Japanese Patent Application No. 2023-173481 filed on October 5, 2023, the entire contents of which are incorporated herein by reference.

### REFERENCE SIGNS LIST

1 Machine tool
10 Bed
11 Front spindle
12 Rare spindle
13 Guide bushing device
14 Tool post
15, 16, 17 Rail
18 NC device
19 Material feeder
21 Guide bushing
22 Guide bushing sleeve
23 Bearing
24 Guide bushing holder
25 Draw bar
26, 27 Tapered surface
AX, AX1, AX2 Axis
CF Chamfered part
CS, CS1, CS2 Joint surface
ED, ED1, ED2 Edge
EF Right end surface
FS Burrs
OS, OS1, OS2 Outer peripheral surface
PT1, PT1, PT2 Protrusion
RS Recess
W1 First member
W2 Second member
WC Welded member

## Claims

1. A machine tool comprising:
two spindles arranged to face each other so as to be movable in a spindle-line direction and configured to be rotated, the spindles respectively gripping a first member and a second member; and
a guide member provided between the two spindles,
the machine tool being configured to frictionally weld the first member and the second member, in a state of the guide member guiding the first member and the second member, by pressing the first member and the second member against each other by moving at least one of the two spindles, with the first member and the second member being in contact with each other in a rotation state caused by a relative rotation of the two spindles, wherein
the machine tool is provided with a movement controller configured to control movement of the at least one of the two spindles in such a manner that the guide member guides one of the first member or the second member when the pressing is started and the guide member guides an other of the first member or the second member when the pressing is finished.

2. The machine tool according to claim 1, wherein
when the relative rotation is stopped, one of the two spindles that grips the first member is controlled at a first moving speed, and an other of the two spindles that grips the second member is controlled at a second moving speed,
a direction of a movement at the first moving speed and a direction of a movement at the second moving speed are a same direction, and
one of the first moving speed and the second moving speed is set to be higher than an other of the first moving speed and the second moving speed.

3. The machine tool according to claim 1 or 2, wherein
an end surface of one of the first member or the second member has a protrusion that protrudes in an axial direction, and
a distal end surface of the protrusion serves as a joint surface.

4. The machine tool according to claim 1 or 2, wherein
an end surface of one of the first member or the second member has a protrusion that protrudes in an axial direction,
an end surface of the other of the first member or the second member has a recess recessed in the axial direction, and
a distal end surface of the protrusion and an inner bottom surface of the recess serve as a joint surface.

5. The machine tool according to claim 1, wherein
a chamfered part is formed on an end surface of one of the first member or the second member gripped by one of the two spindles having a high moving speed, the end surface facing an other of the first member of the second member.

6. The machine tool according to claim 1, further comprising
a processing device configured to process the first member and the second member, wherein
the guide member is a guide bushing configured to guide the first member or the second member during processing.

7. A friction welding method using a machine tool, the machine tool comprising:
two spindles arranged to face each other so as to be movable in a spindle-line direction and configured to be rotated, the spindles respectively gripping a first member and a second member; and
a guide member provided between the two spindles,
the machine tool being configured to frictionally weld the first member and the second member, in a state of the guide member guiding the first member and the second member, by pressing the first member and the second member against each other by moving at least one of the two spindles, with the first member and the second member being in contact with each other in a rotation state caused by a relative rotation of the two spindles,
the method comprising:
a step of guiding one of the first member or the second member by the guide member when the pressing is started; and
a step of guiding an other of the first member or the second member by the guide member when the pressing is finished.
